# EUROPEAN PATENT SPECIFICATION

(11) **EP 3 211 046 B1**
(45) Date of publication and mention of the grant of the patent: **04.12.2019**
(21) Application number: 17157924.6
(22) Date of filing: 24.02.2017
(51) Int. Cl.: C09D 11/16, C09D 11/18, B43K 7/00

(54) **AQUEOUS INK COMPOSITION FOR WRITING INSTRUMENTS**
WÄSSRIGE TINTENZUSAMMENSETZUNG FÜR SCHREIBINSTRUMENTE
COMPOSITION D'ENCRE AQUEUSE POUR INSTRUMENTS D'ÉCRITURE

(30) Priority: 29.02.2016 JP 2016037303
(43) Date of publication of application: 30.08.2017
(73) Proprietor: Mitsubishi Pencil Co., Ltd., Tokyo 140-8537 (JP)
(72) Inventor: SATO, Kenji, Yokohama-shi, Kanagawa 221-8550 (JP); HAYAKAWA, Takeshi, Yokohama-shi, Kanagawa 221-8550 (JP); OGURA, Kousuke, Yokohama-shi, Kanagawa 221-8550 (JP)
(74) Representative: Vossius & Partner Patentanwälte Rechtsanwälte mbB

(56) References cited:
- EP-A1- 2 468 828
- WO-A1-2009/107855
- WO-A1-2010/035836
- JP-A- 2010 150 330
- JP-A- 2010 150 331
- US-A1- 2012 251 222

## Description

### Field

The present invention relates to an aqueous ink composition for writing instruments suited to writing instruments such as an aqueous ink ball-point pen, which is excellent in a writing property, a dryup resistance and the like without reducing a dispersion stability of resin particles.

### Background

An aqueous ink composition for writing instruments has so far been blended in a certain case with resin particles for the purpose of endowing the ink composition with a specific function. When writing instruments charged with the ink described above are left standing in a state in which a cap is detached, it is observed that the writing instruments tend to be liable to be reduced in a discharge property of the ink due to dryup, and changed in physical properties such as viscosity and deteriorated in a writing property attributable to deterioration in a dispersion stability of the particles. A change in the physical properties and deterioration in a writing property are susceptible particularly to an influence exerted by a blend amount and a size of the resin particles.

It is estimated that the dryup is brought about by a mechanism in which a dispersion state of the resin particles is broken due to volatilization of moisture to cause flocculation of the resin particles and in which an ink in a writing part is reduced in a discharge property due to the flocculation of the resin particles.

In order to inhibit the above dryup from being caused, available is a method in which the flocculation is prevented from being brought about or a method in which loose flocculation is caused to thereby create a state like a "cover". However, if the flocculation is loose but "bulky", the "cover" stays in a state in which the "cover" behaves like a highly viscous clot of an ink. Accordingly, though the dryup resistance is exerted, the problem that the above clot is transferred onto the drawn lines and therefore reduces a quality of the drawn lines is involved therein.

On the other hand, known as an ink composition for writing instruments which is improved in a dryup resistant performance is, for example, an aqueous pigment ink composition comprising at least a pigment having a particle diameter falling in a specific range, a moisturizer and water, wherein the moisturizer consists of urea and ethylene urea, and a ratio thereof is 1 : 3 to 5 : 1 in terms of a weight ratio, refer to, for example, Patent Document 1. Further, known is an aqueous ink composition for ball-point pens comprising a colourant containing colored resin particles, water, a thixotropic agent and ethylene oxide-modified polyvinyl alcohol, PVA, refer to, for example, Patent Document 2.

However, the problems that the dryup resistant performance is still unsatisfactory and that inferior writing such as blurring is liable to be caused are involved in Patent Document 1 described above. In Patent Document 2 described above, the non-drying property is surely enhanced by blending the ethylene oxide-modified polyvinyl alcohol, but involved therein is the problem that a clot formed by an aggregated mass of the ink is produced in a certain case in the beginning of writing after the cap off. Also, the problem that the viscosity is elevated with the aging is involved therein as well.

JP2010150331 discloses an aqueous ink composition for a writing instrument comprising 10% by mass of resin particles having a median particle diameter of 0.5-4.0 micrometer; and 0.5 % by mass of a polyvinyl alcohol. JP2010150331 further discloses a writing instrument charged with this ink composition.

### Citation List

### Patent Documents

Patent Document 1: Japanese Patent Application Laid-Open No. Hei 8-127746 (claims, examples and others)
Patent Document 2: Japanese Patent Application Laid-Open No. 2015-120777 (claims, examples and others)

### Disclosure of the Invention

In light of the problems on the conventional arts and the existing situation described above, the present invention tries to solve the problems described above, and an object of the present invention is to provide an aqueous ink composition for a writing instrument suited to writing instruments such as ball-point pens and marking pens of an aqueous ink, which is excellent in a dryup resistance and a writing property without deterioration of a dispersion stability of resin particles and which is less liable to be elevated in a viscosity with the aging.

In light of the conventional problems and the like described above, intense researches repeated by the present inventors have resulted in finding that an aqueous ink composition for a writing instrument which meets the object described above is obtained by containing at least a specific content of resin particles having a specific particle diameter and a specific component in a specific ratio. Thus, the present invention has been come to complete.

That is, the aqueous ink composition for a writing instrument according to the present invention resides in the following items.
(1) An aqueous ink composition for a writing instrument characterised by comprising at least:
   5% by mass or more of resin particles having a median particle diameter; D50 of 0.3 µm or more based on volume; and
   0.05 to 10% by mass of a butenediol•vinyl alcohol copolymer.
(2) The aqueous ink composition for a writing instrument as described in the above item (1), wherein the resin particles are microcapsules having a core-shell structure.
(3) A writing instrument charged with the aqueous ink composition for a writing instrument as described in the above item (1) or (2).

### Advantageous Effects of Invention

According to the present invention, provided is an aqueous ink composition for a writing instrument suited to writing instruments such as ball-point pens and marking pens of an aqueous ink, which is excellent in a dryup resistance and a writing property without deterioration of a dispersion stability of resin particles and which is prevented from being elevated in a viscosity with the aging.

### Brief Description of Drawings

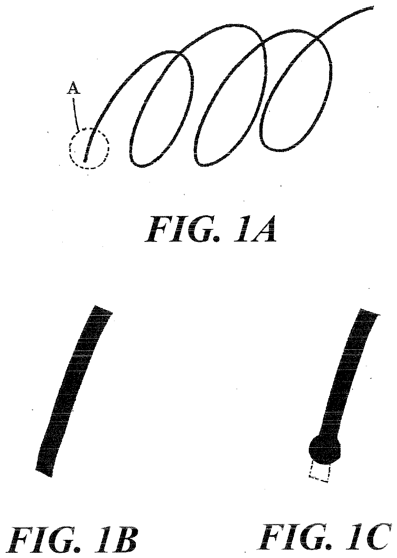

FIG. 1A to 1C are the respective drawings schematically showing evaluation standards, i.e., the presence of blobbing on drawn lines, for an initially drawn line status in the examples of the present invention and the comparative examples, wherein FIG. 1A is a drawing showing an initially drawn line which is spirally written; FIG. 1B and FIG. 1C are drawings obtained by expanding an A part of FIG. 1A; FIG. 1B is a drawing showing a drawn line which does not have a blobbing thereon and which is excellent in an initially drawn line status evaluated as rank: A; and FIG. 1C is a drawing showing a drawn line which has a blobbing thereon and which is inferior in an initially drawn line status evaluated as rank: B.

### Description of Embodiments

The embodiments of the present invention shall be explained below in detail.

The aqueous ink composition for a writing instrument according to the present invention is characterised by comprising at least 5% by mass or more of resin particles having a median particle diameter; D50 of 0.3 µm or more based on volume and 0.05 to 10% by mass of a butenediol•vinyl alcohol copolymer.

### <Resin particles>

The resin particles used in the present invention shall not specifically be restricted in a function and a kind. They may be, for example, resin particles used as a colourant and resin particles used for the purposes of a binder and a sealing effect. Also, materials constituting the resin particles are not be restricted as well. The materials include, for example, an acrylic resin, a styrene resin, a urethane resin, a urea resin, an epoxy resin, a melamine resin, a silicone resin and copolymers thereof, various latex particles, and the like.

The resin particles used as a colourant are composed of coloured resin particles. The resin particles include, for example, [1] coloured resin particles prepared by dispersing a colourant comprising a pigment including an inorganic pigment such as carbon black and titanium oxide and an organic pigment such as a phthalocyanine pigment and an azo pigment in resin particles, [2] coloured resin particles which are covered on a surface with the colourant comprising the pigments described above, [3] coloured resin particles prepared by dyeing resin particles with a colourant comprising a dye such as a direct dye, an acid dye, a basic dye, a food dye, and a fluorescent dye, and [4] coloured resin particles prepared by turning resin particles into thermochromic or photochromic resin particles with a leuco dye and a photochromic dye.

The resin components of the coloured resin particles of [1] to [3] described above include, for example, at least one selected from the various resins described above. The resin components may be resins subjected, if necessary, to treatment such as cross-linking. Methods which have so far publicly be known, such as a method in which a colourant is added in preparing resin particles by polymerisation, a method in which resin particles are coated on surfaces with a colorant by a hybridisation method, and a method in which resin particles are dyed with a dye are used as a method for dyeing the above resins.

The thermochromic coloured resin particles of [4] described above include thermochromic coloured resin particles produced by microcapsulating a thermochromic composition containing at least a leuco dye, a developer which is a component having ability of colouring the above leuco dye, and a discolouration temperature regulator which can control a discolouration temperature in the colouration of the leuco dye and the developer described above so that the microcapsule is provided with a prescribed average particle diameter. Also, the photochromic colored resin particles include photochromic colored resin particles produced by microcapsulating a photochromic pigment or compound having a property in which the pigment or compound is colourless under an indoor lightenvironment and in which the pigment or compound is coloured under a UV irradiating environment.

The microcapsulating method includes, for example, an interfacial polymerisation method, an interfacial polycondensation method, an *in situ* polymerisation method, a liquid cure coating method, a phase separation method from an aqueous solution, a phase separation method from an organic solvent, a melting dispersion cooling method, an atmospheric suspension coating method, a spray drying method, and the like. The method can suitably be selected according to the uses, the form of the microcapsule and the structural characteristics.

The microcapsulated resin particles having a core-shell structure are desired as the preferred resin particles in terms of exerting stability and the more satisfying functions.

The resin particles used for the purposes of a binder and a sealing effect shall not specifically be restricted and include, for example, at least one selected from polystyrene base resin particles, polyurethane base resin particles, acryl base resin particles, olefin base wax emulsions such as polyethylene wax emulsions and polypropylene wax emulsions.

The resin particles of the present invention such as the resin particles used as the above colourants and the resin particles used for the purposes of a binder and a sealing effect are prepared so that the resin particles are provided with a suitable average particle diameter in terms of allowing the exertion of the prescribed functions such as a colouring strength, a dispersion stability, and a binder and a sealing effect to be consistent with the dissolution of the problems of the present invention such as the dryup resistance described above.

In the present invention, the larger the content of the resin particles is and the larger the particle diameter of the resin particles is, the larger the influence exerted to the performances of the ink is, and as the resin particles reach a content of 5% by mass or more based on a total amount of the ink composition and a particle diameter of 0.3 µm or more, the problems of the present invention are observed to tend to become apparent.

A particle diameter and a content of the resin particles used are varied according to the functions of the resin particles and the kind and the uses of the writing instruments, and the resin particles are controlled preferably to a particle diameter of 0.3 to 15 µm and a content of 5 to 30% by mass based on a total amount of the ink composition.

The "particle diameter" prescribed in the present invention including the examples and others is a value of median; D50 calculated based on a volume by means of a particle diameter distribution analyzer HRA 9320-X100 manufactured by Nikkiso Co., Ltd.

### <Butenediol•vinyl alcohol copolymer>

An ethylene vinyl alcohol copolymer, EVOH, has a high hydrogen bonding strength ,or high crystallinity, and a polyvinyl alcohol copolymer, PVOH, has a low crystallinity or low hydrogen bonding strength. The butenediol•vinyl alcohol copolymer, BVOH, used in the present invention is provided with a contrary property of "a low crystallinity and a high hydrogen bonding strength", whereby the butenediol•vinyl alcohol copolymer is a material exerting a function staying in a relation of trade-off in conventional PVOH in addition to an excellent transparency and an excellent solvent resistance. In the present invention, the functions of an excellent writing property and no rise in a viscosity with the aging are exerted without reducing the effects of the present invention, that is, a dispersion stability of the resin particles, a dryup resistance and a drawn line quality in the ink composition prepared by using the resin particles described above.

The butenediol•vinyl alcohol copolymer, BVOH, which can be used is a polyvinyl alcohol derived polymer having a 1,2-diol structure and the like on a side chain. It can be obtained, for example, by a production method in which 3,4-diacetoxy-1-butene is reacted with vinyl acetate to obtain a reaction product and in which the reaction product is hydrolysed. A crystalline component amount of from the lamella crystal structure to the complete amorphous structure can be controlled by controlling the respective components. A water solubility of the copolymer can be controlled as well by controlling the crystallinity described above.

The butenediol•vinyl alcohol copolymer, BVOH, used may be synthesised by the production method and the like described above. Also, capable of being used are various grades of a commercially available Nichigo G-Polymer series manufactured by Nippon Synthetic Chemical Industry Co., Ltd., for example, AZF8035W, OKS-1011, OKS-1028, OKS-8041, OKS-8118, and the like.

A content of the butenediol•vinyl alcohol copolymer, BVOH, used in the present invention is 0.05 to 10% by mass, preferably 0.1 to 5% by mass based on a total amount of the ink composition.

If the above content is less than 0.05 by mass, the intended effects of the present invention are not obtained, and on the other hand, if the content exceeds 10% by mass, the ink is viscous. Accordingly, both are not preferred.

In the aqueous ink composition for a writing instrument according to the present invention, capable of being suitably contained in addition to the respective components described above are, a colourant, an anionic surfactant, the respective components usually used for aqueous ink compositions for writing instruments, for example, a water-soluble organic solvent, a thickener, a lubricant, a rust preventive, an antiseptic agent or a fungicide, a pH modifier, and the like as long as the effects of the present invention are not damaged. Further, water tap water, refined water, distilled water, ion-exchanged water, purified water and the like which is a solvent is blended as a balance.

In the present invention, when the resin particle is used as a colourant, a colouring material, colourant other than the coloured resin particle can be used in combination as a complementary colour component. Also, when the resin particle is not used as a colourant, the resin particle can be used as a colouring component for the ink.

Dyes dissolved or dispersed in water, inorganic pigments and organic pigments such as titanium oxide which have so far been publicly known, pigments prepared by subjecting silica and mica used as base materials to multilayer coating on surfaces with iron oxide, titanium oxide and the like can be used in suitable amounts as the colourant as long as the effects of the present invention are not damaged.

The organic pigment includes, for example, azo lakes, insoluble azo pigments, chelate azo pigments, phthalocyanine pigments, perylene and perynone pigments, nitroso pigments, and the like.

To be more specific, the dye includes, for example, acid dyes such as eosin, phloxine, water yellow #6-C, acid red, water blue #105, brilliant blue FCF, and nigrosine NB; direct dyes such as direct black 154, direct sky blue 5B, and violet BOOB; and basic dyes such as rhodamine and methyl violet. The inorganic pigment includes carbon black, titanium black, zinc oxide, iron oxide, chromium oxide, iron black, cobalt blue, iron oxide yellow, viridian, zinc sulfide, lithopone, cadmium yellow, cinnabar, cadmium red, chrome yellow, molybdate orange, zinc chromate, strontium chromate, white carbon, clay, talc, ultramarine blue, precipitated barium sulfate, baryte powder, calcium carbonate, white lead, Prussian blue, manganese violet, aluminium powder, brass powder, and the like. The organic pigment includes C. I. pigment blue 15, C. I. pigment blue 17, C. I. pigment blue 27, C. I. pigment red 5, C. I. pigment red 22, C. I. pigment red 38, C. I. pigment red 48, C. I. pigment red 49, C. I. pigment red 53, C. I. pigment red 57, C. I. pigment red 81, C. I. pigment red 104, C. I. pigment red 146, C. I. pigment red 245, C. I. pigment yellow 1, C. I. pigment yellow 3, C. I. pigment yellow 12, C. I. pigment yellow 13, C. I. pigment yellow 14, C. I. pigment yellow 17, C. I. pigment yellow 34, C. I. pigment yellow 55, C. I. pigment yellow 74, C. I. pigment yellow 95, C. I. pigment yellow 166, C. I. pigment yellow 167, C. I. pigment orange 5, C. I. pigment orange 13, C. I. pigment orange 16, C. I. pigment violet 1, C. I. pigment violet 3, C. I. pigment violet 19, C. I. pigment violet 23, C. I. pigment violet 50, C. I. pigment green 7, and the like.

The above colourants can be used alone or in a mixture of two or more kinds thereof.

The anionic surfactant which can be used includes, for example, fatty acid salts, alkylsulfate ester salts, alkylbenzenesulfonate salts, alkylnaphthalenesulfonate salts, alkylsulfosuccinate salts, alkyldiphenyletherdisulfonate salts, alkylphosphate salts, polyoxyethylenealkylsulfate ester salts, acid polyoxyethylenealkylarylsulfate salts, naphthalenesulfonic acid formalin condensation product salts, polyoxyethylenealkylphosphate esters, and the like. Among the anionic surfactant, the compounds having aromatic rings are preferred, and naphthalenesulfonic acid formalin condensation product salts are particularly preferred. The above anionic surfactants have an effect of stabilising furthermore the physical properties of the ink.

A content of the above anionic surfactants is suitably controlled in a range of 0.05 to 10% by mass based on a total amount of the ink composition.

The water-soluble organic solvent which can be used includes alcohols such as ethylene glycol, diethylene glycol, triethylene glycol, propylene glycol, polyethylene glycol, 3-butylene glycol, thiodiethylene glycol, and glycerin, ethylene glycol monomethyl ether, diethylene glycol monomethyl ether and the like, and the water-soluble organic solvent can be used alone or in a mixture of two or more kinds thereof.

A content of the above water-soluble organic solvents is suitably adjusted for every ink composition, and the content falls in a range of usually about 10 to 30% by mass based on a total amount of the ink composition.

In order to exert the function of the excellent drying property of the drawn lines, it is an effective means to control a content of the above water-soluble organic solvents to 10% by mass or less, but on the other hand, the dryup resistance is liable to be damaged. According to the present invention, even if the content is 10% by mass or less, 7% by mass or less or 5% by mass or less, the dryup resistance is not damaged.

The thickener which can be used is preferably at least one selected from, for example, the group consisting of synthetic polymers, cellulose and polysaccharides. To be specific, the thickener includes gum arabic, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, starch glycolate and salts thereof, polyvinylpyrrolidone, polyvinyl methyl ether, polyacrylic acid and salts thereof, polyethylene oxide, copolymers of vinyl acetate and polyvinylpyrrolidone, styrene-acrylic acid copolymers and salts thereof, and the like.

The lubricant includes nonionic compounds such as fatty acid esters of polyol which are used as well for surface treating agents of pigments, long-chain fatty acid esters of sugars, and polyoxyalkylene long-chain fatty acid esters, anionic compounds such as phosphate esters, alkylsulfonate salts of long-chain fatty acid amides, and alkylsulfonate salts, derivatives of polyalkylene glycols and fluorine base surfactants, polyether-modified silicones, and the like.

The rust preventive includes benzotriazole, tolyltriazole, dicyclohexylamonium nitrite, saponins and the like. The antiseptic agent or the fungicide includes phenol, sodium omadine, sodium benzoate, benzisotiazolinone, benzimidazole compounds, and the like.

The pH modifier includes hydroxides of alkaline metals such as sodium hydroxide, potassium hydroxide, and lithium hydroxide, amine compounds such as triethanolamine, diethanolamine, monoethanolamine, dimethylethanolamine, morpholine, and triethylamine, and ammonia, and the like.

The aqueous ink composition for a writing instrument according to the present invention is obtained by suitably combining 5% by mass or more of the resin particles having an average particle diameter of 0.3 µm or more and 0.05 to 10% by mass of the butenediol•vinyl alcohol copolymer each described above with the anionic surfactant, the water-soluble organic solvent and the other respective components according to the uses of the inks for writing instruments such as ballpoint pens and marking pens and stirring and mixing the components by means of a stirring device such as a homo mixer, a homogenizer,and a disperser. Further, coarse particles contained in the ink composition are removed, if necessary, by filtration or centrifugal separation, whereby the aqueous ink composition for a writing instrument can be prepared.

The aqueous ink composition for a writing instrument according to the present invention is mounted in ballpoint pens, marking pens and the like which are equipped with pen tip parts such as a ballpoint pen tip, a fiber tip, a felt tip, and a plastic tip.

In the ballpoint pen in the present invention, an ink reservoir, refill, for a ballpoint pen is charged with an ink follower together with the aqueous ink composition for a writing instrument having the composition described above. The ink follower includes substances which are not compatible with the aqueous ink composition filled in the above ink refill and which have a smaller specific gravity than the specific gravity of the aqueous ink composition, for example, polybutene, silicone oils, mineral oils and the like.

The structures of a ballpoint pen and a marking pen shall not specifically be restricted and may be a ballpoint pen and a marking pen of a direct liquid type provided with a collector structure of ink holding mechanism in which a barrel itself is used for an ink refill and in which the aqueous ink composition for a writing instrument having the composition described above is filled in the above barrel.

The reason why the aqueous ink composition for a writing instrument thus constituted containing the resin particles according to the present invention can be an aqueous ink composition for a writing instrument which is excellent in a writing property and prevented from rising in a viscosity with aging withoutdeterioration in a dispersion stability of the resin particles, a dryup resistance and a drawn line quality is estimated to be attributable to the followings.

When an aqueous ink composition for a writing instrument containing resin particles is used, the problems that the dispersion state is broken by volatilization of a moisture to cause the resin particles to be aggregated in the ink and that if the resin particles are aggregated in a writing part, the ink is inhibited from being discharged to result in causing a dryup leading to inferior writing have so far been brought about. Further, a method in which modified ethylene oxide PVA is contained in the ink to cause loose aggregation is available for inhibiting the dryup. However, if the aggregation is loose but "bulky", the aggregation stays in a state in which the aggregation is a highly viscous clot of an ink. Accordingly, though the dryup resistance is exerted, the problem that the above clot is transferred onto the drawn lines and therefore reduces a quality of the drawn lines has so far been involved therein.

In conventional aqueous ink compositions for a writing instrument, the larger the content of the resin particles is, and the larger the particle diameter thereof is, the more the problems described above are observed to tend to become apparent. In the present invention, however, the butenediol•vinyl alcohol copolymer, BVOH, provided with a contrary property of "a low crystallinity and a high hydrogen bonding strength" is contained in a content of 0.05 to 10% by mass in the foregoing aqueous ink composition for a writing instrument containing resin particles, whereby a loose aggregated matter having a suitable bulkiness can be formed even if a moisture is volatilized. Accordingly, the aqueous ink composition of the present invention is excellent in a dryup resistance without deterioration in a dispersion stability of the resin particles. Also, the aqueous ink composition of the present invention is excellent as well in a writing performance without causing a reduction in a quality of the drawn lines which is brought about by clots formed by the ink on the drawn lines. and Furthermore, the aqueous ink composition of the present invention exerts a function in which a viscosity is prevented from being elevated with aging.

### EXAMPLES

Next, the present invention shall be explained in further details with reference to examples and comparative examples, but the present invention shall not be restricted to the examples and the like shown below.

### Examples 1 to 9 and Comparative Examples 1 to 5

The respective aqueous ink compositions for a writing instrument were prepared according to blend compositions shown in the following Table 1.

Thermochromic microcapsule pigments 1 and 2 which were resin particles used as colourants in Examples 1 and 2 were obtained by the following production methods 1 and 2. Production example 1: thermochromic microcapsule pigment 1

First, 1 mass part of ETAC, manufactured by Yamada Chemical Co., Ltd., as a leuco dye, 2 mass parts of bisphenol A as a developer and 24 mass parts of myristyl myristate as a thermochromic temperature controller were molten by heating at 100°C to obtain 27 mass parts of a homogeneous composition . Hereinafter, "mass part" is referred to merely as "part".

Then, 10 parts of Isocyanate and 10 parts of polyol were added as a microcapsule filming agent to 27 parts of a homogeneous hot molten of the composition obtained above and stirred and mixed. Next, the composition was emulsified at 25°C by using 60 parts of a 12% polyvinyl alcohol aqueous solution as a protective colloid to prepare a dispersion. Then, the dispersion was treated at 80°C for 60 minutes by using 5 parts of 5% polyamine to obtain microcapsules having a core-shell structure.

### Production example 2: thermochromic microcapsule pigment 2

Analogously, 1 part of dye RED520, manufactured by Yamada Chemical Co., Ltd., as a leuco dye, 2 parts of 4,4'-(2-ethylhexylidene)bisphenol as a developer and 24 parts of 4,4'-(hexafluoroisopropylidene)bisphenol dimyristate as a thermochromic temperature controller were molten by heating at 100°C to obtain 27 parts of a homogeneous composition.

Then, 27 parts of the homogeneous hot molten of the composition obtained above was gradually added to 100 parts of an aqueous solution of 90°C prepared by dissolving 40 parts of a methyl vinyl ether•maleic anhydride copolymer resin, Gantlet AN-179, manufactured by ISP Co., Ltd., as a protective colloid agent in water while neutralizing with NaOH, and the mixture was dispersed in the form of oil drops having a diameter of about 0.5 to 1.0 µm while heating and stirring. Then, 20 parts of a melamine resin, Sumitex Resin M-3, manufactured by Sumitomo Chemical Co., Ltd., as a capsule filming agent was gradually added thereto and treated at 90°C for 30 minutes to obtain microcapsules having a core-shell structure.

The respective ink compositions obtained above were used to prepare aqueous ink ballpoint pens. To be specific, a barrel of a ballpoint pen of trade name: Signo UM-100, manufactured by Mitsubishi Pencil Co., Ltd. was used to fill the respective aqueous inks described above in a refill. The refill comprises an ink reservoir made of polypropylene having an inner diameter of 4.0 mm and a length of 113 mm, a stainless-made tip, cemented carbide ball, having a ball diameter of 0.7 mm, and a joint connecting the reservoir with the tip. Moreover, an ink follower comprising a mineral oil as a principal component was mounted at a rear end of the ink to prepare aqueous ink ballpoint pens.

The respective aqueous ink ballpoint pens obtained above were used to evaluate a dryup resistance, an initial drawn line status and a pen aging stability by the following evaluation methods. Further, an ink aging stability from an initial viscosity and a viscosity after aged of the respective ink compositions for a writing instrument obtained above was evaluated.

The evaluation results thereof are shown in the following Table 1.

### Evaluation method of dryup resistance:

The respective aqueous ink ballpoint pens obtained were left standing for 10 days in a thermohygrostat bath under an environment of 25°C and 60% RH in a state in which a pen tip was exposed and turned downward, and then the ballpoint pens were used to write continuously 20 cycles of circles having a diameter of about 2 cm in a spiral manner on a PPC paper and evaluate a dryup resistance thereof according to the following evaluation criteria.

### Evaluation criteria:

A: can be written well without causing blurring
B: blurring is caused five or less cycles
C: blurring is caused more than five cycles

### Evaluation method of initial drawn line status:

In the example of an A rank in the evaluation described above, the drawn line status in initial writing was evaluated according to the following evaluation criteria and FIG. 1A to 1C.

### Evaluation criteria:

A: drawn line blobbing as a result of a state in which the ink initially hesitates to be discharged and then drips in the form of a clot is not observed, and the lines are evenly written, refer to FIG. 1B
B: drawn line blobbing is observed, refer to FIG. 1C

### Evaluation method of pen aging stability:

The respective aqueous ink ballpoint pens obtained were stored for one month on the condition of 50°C and 65% RH and then used to write spirals on a writing test paper based on JIS P 3201 on the writing conditions of a writing speed of 4.5 m/minute, a writing angle of 60° and a writing load of 1.96 N by a writing test equipment of Minitek writing test equipment, manufactured by Mitsubishi Pencil Co., Ltd. based on JIS S 6039-2001, whereby a writing test was carried out. An intensity of the drawn line in an optional part of 0 to 100 m was compared with an intensity of the drawn line in any part of 300 to 400 m.

### Evaluation criteria:

A: no difference in an intensity of the drawn lines
B: slight acceptable difference is observed in an intensity of the drawn lines

### Evaluation method of ink aging stability:

The respective aqueous ink obtained were charged in a glass bottle and stored for one month on the condition of 50°C and 65% RH, and then a viscosity value thereof at a shear rate of 3.83 s⁻¹ was compared with an initial viscosity for immediately after produced. A smaller difference between the ink viscosity values in the beginning and after aged by storing for one month is an index showing that the ink is excellent in stability.

**[Table 1]**

| (Total: 100 mass%) | | | | | | | | | | | | | | | | |
|---|---|---|---|---|---|---|---|---|---|---|---|---|---|---|---|---|
| | | | Example | | | | | | | | | Comparative Example | | | | |
| | | | 1 | 2 | 3 | 4 | 5 | 6 | 7 | 8 | 9 | 1 | 2 | 3 | 4 | 5 |
| Resin particle | Thermochromic microcapsule pigment 1 | *1 | 12 | | | | 12 | 12 | | | | 12 | | | | 12 |
| | Thermochromic microcapsule pigment 2 | *2 | | 15 | | | | | 15 | 15 | | | 15 | | | |
| | Coloured urethane particle | *3 | | | 10 | | | | | | | | | 10 | | |
| | Coloured acrylic resin particle | *4 | | | | 12 | | | | | | | | | 12 | |
| | Acrylic resin particle | *5 | | | | | | | | | 5 | | | | | |
| Resin | Copolymer of butenediol•vinyl alcohol | *6 | 1 | | 0.8 | | 0.05 | 6 | | | 1 | | | | | |
| | Copolymer of butenediol•vinyl alcohol | *7 | | 2 | | 1.2 | | | 2 | 2 | | | | | | |
| | Modified ethyleneoxide-polyvinylalcohol | *8 | | | | | | | | | | | | | | 3 |
| Colourant | FD&C Blue No.1 dye | | | | | | | | | | 6 | | | | | |
| Anionic surfactant | Sodium salt for condensation product of naphtalenesulfonic acid with folmaldehyde | *9 | 3 | | 3 | | 3 | 3 | | | 3 | 3 | | 3 | | 3 |
| | Dodecylbenzenesulfonic acid | *10 | | 3 | | 3 | | | | | | | 3 | | 3 | |
| | Sodium laureth sulfate | *11 | | | | | | | | 3 | | | | | | |
| pH modifier | Triethanolamine | | 0.1 | 0.1 | 0.1 | 0.1 | 0.1 | 0.1 | 0.1 | 0.1 | 0.1 | 0.1 | 0.1 | 0.1 | 0.1 | 0.1 |
| Thickner | Xanthan gum | *12 | 0.3 | 0.3 | 0.3 | 0.3 | 0.3 | 0.3 | 0.3 | 0.3 | 0.3 | 0.3 | 0.3 | 0.3 | 0.3 | 0.3 |
| Rust preventive | Benzotriazole | | 0.3 | 0.3 | 0.3 | 0.3 | 0.3 | 0.3 | 0.3 | 0.3 | 0.3 | 0.3 | 0.3 | 0.3 | 0.3 | 0.3 |
| Preservative | Benzisothiazolinone and others | *13 | 0.3 | 0.3 | 0.3 | 0.3 | 0.3 | 0.3 | 0.3 | 0.3 | 0.3 | 0.3 | 0.3 | 0.3 | 0.3 | 0.3 |
| Lubricant | Phosphate ester | *14 | 0.3 | 0.3 | 0.3 | 0.3 | 0.3 | 0.3 | 0.3 | 0.3 | 0.3 | 0.3 | 0.3 | 0.3 | 0.3 | 0.3 |
| Solvent | Glycerol | | 10 | 10 | 10 | 10 | 10 | 10 | 10 | 10 | 10 | 10 | 10 | 10 | 10 | 10 |
| Water | Purified water | | 72.7 | 68.7 | 74.9 | 72.5 | 73.65 | 67.7 | 71.7 | 68.7 | 88.7 | 73.7 | 70.7 | 75.7 | 88.7 | 70.7 |
| Anti-dryup property | | | A | A | A | A | B | A | A | A | A | C | C | C | C | A |
| Line status for initial drawing | | | A | A | A | A | A | A | A | A | A | A | A | A | A | B |
| Aging stability for pen body | | | A | A | A | A | A | B | B | B | A | A | A | A | A | A |
| Viscosity for lnk: initial (mPa·s, 3.83 s⁻¹) | | | 647 | 742 | 550 | 622 | 633 | 678 | 680 | 662 | 505 | 625 | 702 | 528 | 595 | 653 |
| Viscosity for ink: aged (mPa·s, 3.83 s⁻¹) | | | 644 | 745 | 545 | 632 | 610 | 798 | 842 | 728 | 520 | 612 | 698 | 532 | 595 | 647 |

| | | | | | | | | | | | | | | | | |
|---|---|---|---|---|---|---|---|---|---|---|---|---|---|---|---|---|
| The marks *1 to *14 described above show the followings. *1: Production Example 1: urethane shell, particle diameter: 1.2 µm *2: Production Example 2: melamine shell, particle diameter: 0.8 µm *3: Art Pearl C-800 Black, particle diameter: 6 µm, manufactured by Negami Chemical Industrial Co., Ltd. *4: Art Pearl G-800 BK, particle diameter: 6 µm, manufactured by Negami Chemical Industrial Co., Ltd. *5: Art Pearl J-4P, particle diameter: 2.2 µm, manufactured by Negami Chemical Industrial Co., Ltd. *6: Nichigo G-Polymer OKS1011, manufactured by Nippon Synthetic Chemical Industry Co., Ltd. *7: Nichigo G-Polymer OKS8041, manufactured by Nippon Synthetic Chemical Industry Co., Ltd. *8: WO320R, manufactured by Nippon Synthetic Chemical Industry Co., Ltd. *9: Lavelin FP, manufactured by DKS Co., Ltd. *10: Neopelex GS, manufactured by Kao Corporation *11: Emal 270 J, manufactured by Kao Corporation *12: KELZAN ® S, manufactured by Sansho Co., Ltd. *13: Bioden 421, manufactured by Daiwa Chemical Industries Co., Ltd. *14: RS-610, manufactured by Toho Chemical Industry Co., Ltd. | | | | | | | | | | | | | | | | |

As apparent from results shown in Table 1 described above, it has become apparent that the aqueous ink compositions for a writing instrument which is excellent in a writing property and is prevented from being elevated in a viscosity with aging without reducing a dispersion stability of the resin particles, a dryup resistance and a drawn line quality are obtained in Examples 1 to 9 falling in the scope of the present invention as compared with Comparative Examples 1 to 5 out of the scope of the present invention.

To observe Comparative Examples 1 to 5, the aqueous ink compositions for a writing instrument prepared in Comparative Examples 1 to 4 contained the same resin particles as in Examples 1 to 4 and did not contain the butenediol•vinyl alcohol copolymer. In Comparative Example 5, the conventional modified ethylene oxide polyvinyl alcohol copolymer, PVA described in Japanese Patent Application Laid-Open No. 2015-120777 was contained in place of the butenediol•vinyl alcohol copolymer. It was confirmed that in Comparative Examples 1 to 5, the effects of the present invention could not be exerted.

### Industrial Applicability

Obtained is an aqueous ink composition for a writing instrument which is suited to writing instruments such as ballpoint pens, and marking pens of an aqueous ink.

## Claims

1. An aqueous ink composition for a writing instrument, wherein the aqueous ink composition comprises at least:
5% by mass or more of resin particles having a median particle diameter; D50 of 0.3 µm or more based on volume; and
0.05 to 10% by mass of a butenediol•vinyl alcohol copolymer.

2. The aqueous ink composition for a writing instrument as described in claim 1, wherein the resin particles are microcapsules having a core-shell structure.

3. A writing instrument charged with the aqueous ink composition for a writing instrument as described in claim 1 or 2.

## Patentansprüche

1. Eine wässrige Tintenzusammensetzung für ein Schreibinstrument, wobei die wässrige Tintenzusammensetzung mindestens umfasst:
5 Massen-% oder mehr an Harzteilchen mit einem mittleren Teilchendurchmesser; D50 von 0,3 µm oder mehr, bezogen auf Volumen; und
0,05 bis 10 Massen-% eines Butendiol•Vinylalkohol-Copolymers.

2. Die wässrige Tintenzusammensetzung für ein Schreibinstrument wie in Anspruch 1 beschrieben, wobei es sich bei den Harzteilchen um Mikrokapseln mit einer Kern-Hülle-Struktur handelt.

3. Ein Schreibinstrument, das mit der wässrigen Tintenzusammensetzung für ein Schreibinstrument wie in Anspruch 1 oder 2 beschrieben befüllt ist.

## Revendications

1. Composition d'encre aqueuse pour un instrument d'écriture, laquelle composition d'encre aqueuse comprend au moins :
5 % en masse ou plus de particules de résine ayant un diamètre médian de particule D50 de 0,3 µm ou plus basée sur le volume ; et
0,05 à 10 % en masse d'un copolymère de butènediol•alcool vinylique.

2. Composition d'encre aqueuse pour un instrument d'écriture selon la revendication 1, dans laquelle les particules de résine sont des microcapsules ayant une structure cœur-gaine.

3. Instrument d'écriture chargé de la composition d'encre aqueuse pour instrument d'écriture telle que décrite dans la revendication 1 ou 2.
